# EUROPÄISCHE PATENTSCHRIFT

(11) **EP 3 423 516 B1**
(45) Veröffentlichungstag und Bekanntmachung des Hinweises auf die Patenterteilung: **02.06.2021**
(21) Anmeldenummer: 17708238.5
(22) Anmeldetag: 01.03.2017
(51) Int. Cl.: C08J 5/04, C08J 5/10, C08J 5/24, C08G 18/48, C08G 18/76

(54) **VERFAHREN ZUR HERSTELLUNG VON FASERVERBUNDBAUTEILEN**
METHOD FOR MANUFACTURING COMPOSITE FIBROUS COMPONENTS
PROCEDE DE FABRICATION D'ELEMENTS COMPOSITES EN FIBRES

(30) Priorität: 04.03.2016 EP 16158613
(43) Veröffentlichungstag der Anmeldung: 09.01.2019
(73) Patentinhaber: Covestro Intellectual Property GmbH & Co. KG, 51373 Leverkusen (DE)
(72) Erfinder: SCHORNSTEIN, Marcel, 41462 Neuss (DE)
(74) Vertreter: Levpat
(86) Internationale Anmeldenummer: PCT/EP2017/054807
(87) Internationale Veröffentlichungsnummer: WO 2017/149031

(56) Entgegenhaltungen:
- WO-A1-2014/170252
- WO-A1-2015/165823
- WO-A1-2016/001100

## Beschreibung

Die Erfindung betrifft sheet moulding compounds (SMC) sowie ein Verfahren zur Herstellung von Faserverbundbauteilen aus diesen sheet moulding compounds (SMC).

Prinzipiell sind Faserverbundwerkstoffe aus einem Matrixmaterial aus Kunststoff und darin aufgenommenen natürlichen oder künstlichen, organischen oder anorganischen Fasern aufgebaut. Faserverbundbauteile finden aufgrund ihres geringen spezifischen Gewichts und ihrer großen Steifigkeit und Belastbarkeit breite Anwendung in der Luft- und Raumfahrttechnik, im Fahrzeug-, Maschinen- und Anlagenbau sowie in Sportgeräten.

Im Bereich der Faserverbundbauteile gibt es eine Vielzahl verschiedener Formgebungsprozesse, wie z.B. das Resin-Transfer-Molding- (RTM)-Verfahren oder das Vakuuminfusionsverfahren, bei dem Fasergelege in eine Form eingelegt werden, die Form geschlossen wird und das Harz anschließend in die Form injiziert wird. Die Vernetzung des Harzes in der Form erfolgt typischerweise durch Wärmezufuhr. Eine Schwierigkeit und somit ein Nachteil bei diesem Verfahren ist die Verwendung von Füllstoffen, durch die die Viskosität des Rohstoffgemisches erhöht wird, wodurch die Fasern nicht vollständig imprägniert werden können. Außerdem wird der Füllstoff nicht mehr gleichmäßig im Bauteil verteilt. Das Bauteil ist inhomogen, was sich negativ auf die Eigenschaften des Bauteils auswirkt.

Faserverstärkte Materialien in Form von sheet moulding compounds (SMC) werden in vielen industriellen Anwendungen wegen ihrer bequemen Handhabung, der erhöhten Effizienz bei der Verarbeitung zu Bauteilen und der guten Oberflächenqualität der Faserverbundbauteile eingesetzt und sind beispielsweise in WO 99/50341 A1 beschrieben. In WO 99/50341 A1 wird die Herstellung von faserverstärkten Bauteilen beschrieben, wobei diese aus mehreren SMC-Schichten hergestellt werden. In WO 03/080319 A1 wird ein Verfahren zur Herstellung von Harzmatten mit fließfähiger Gelege- oder Textilverstärkung beschrieben (SMC) sowie daraus erhaltene Bauteile.

SMC steht für "sheet moulding compound" und ist die englische Bezeichnung für eine Harzmatte nach DIN EN 14598-1 (Verstärkte härtbare Formmassen-Spezifikation für Harzmatten (SMC) und faserverstärkte Pressmassen (BMC)- Teil 1: Bezeichnung; Deutsche Fassung EN 14598:2005. Mit SMC wird im allgemeinen eine fließfähige Harzmatte mit Verstärkungsfasern mit bevorzugt isotropen Eigenschaften bezeichnet. SMC ist eine flächige Harzmatte, basierend beispielsweise auf ungesättigtem Polyesterharz oder Vinylesterharz. Als Verstärkungsfasern werden üblicherweise Glasfasern verwendet, doch sind auch andere Materialien zur Verstärkung geeignet. Eine typische SMC-Rezeptur besteht zum Beispiel zu ca. 30% aus einem Polymer, ca. 30% aus einem Füllstoff und ca. 30% aus Glasfasern. Der Rest setzt sich aus Zuschlagstoffen zusammen, wie zum Beispiel Farbpigmenten, Härtern, Dispergierhilfsmitteln und ähnlichen Stoffen. SMC wird aus einer sogenannten Harzstammpaste (Reaktionsgemisch) und Verstärkungsfasern hergestellt. Die Harzstammpaste und die Fasern werden nacheinander auf zwei Trägerfolien aufgetragen. Nachdem die Verstärkungsfasern aufgebracht sind, werden beide Trägerfolien zusammengepresst, so dass eine Art Sandwich entsteht. Dieses Sandwich wird durch Druck- und Walkbewegungen zum sogenannten SMC verarbeitet, wobei die Fasern gleichmäßig mit dem Harz benetzt werden. Am Ende wird das Sandwich auf Rollen gewickelt oder geschnitten und gestapelt. Die teilweise Härtung/Reifung des Reaktionsgemisches erfolgt während des gesamten Prozederes auf chemische und/oder physikalische Weise. Nach diesem Härte-/Reifeprozess kann das gereifte, aber noch nicht vollständig ausgehärtete SMC weiterverarbeitet werden. Nach Abziehen der Trägerfolien wird das SMC üblicherweise in beheizten Presswerkzeugen zu Faserverbundbauteilen verarbeitet. Die Temperatur der Werkzeugform beträgt im allgemeinen ca. 130 bis 155°C. Durch die Werkzeugtemperatur wird die Aushärtung gestartet, wobei das SMC eine exotherme Vernetzungsreaktion durchläuft. Bei der Verarbeitung in den Presswerkzeugen wird die Dosierung des SMC üblicherweise manuell vorgenommen. Zu einer problemlosen Fertigung des Formteils (Bauteils) ist das Einhalten genauer Dosiermengen wichtig. Dazu wird das SMC nicht nur nach Schablonen zugeschnitten, sondern auch noch gewogen. Das Abwiegen des Zuschnitts dient als Kontrolle und ermöglicht eine eventuelle Korrektur des Zuschnitts. Danach wird das SMC im Werkzeug platziert und das Werkzeug zugefahren. Ein Pressdruck wird aufgebracht und so lange gehalten, bis das Formteil vollständig ausgehärtet ist.

Bei der industriellen Anwendung von SMC werden neben einem guten Handling, kurze Reifezeiten, lange Lagerstabilitäten bei Raumtemperatur auch schnelle Zykluszeiten sowie geringe Emissionen (wenig VOC; z.B.verursacht durch flüchtige Lösungsmittel, die gegebenenfalls im SMC enthalten sind) verlangt.

Neben Polyestem, Vinylestern und Epoxy-Systemen gibt es nur wenige Harze, die wegen ihrer Festigkeit und gleichzeitig ihrer hohen Zähigkeit zur Herstellung von Verbundbauteilen bevorzugt verwendet werden. Dazu zählen u.a. auch Polyurethanharze, die wegen ihrer Zähigkeit und ihrer Festigkeit insbesondere auch zur Herstellung von Faserverbund-Profilen, z.B. im Pultrusionsverfahren eingesetzt werden. Faserverbundbauteile auf Basis Polyurethan weisen gegenüber Bauteilen aus Vinylestern, ungesättigten Polyesterharzen (UPE) oder UPE-Urethan-Hybrid-Harzen eine verbesserte Zähigkeit auf. PUR wird bereits zur Herstellung von Faserverbundbauteilen eingesetzt, aber nicht im "SMC-Verfahren", weil PUR für das SMC-Verfahren aufgrund der hohen Reaktivität der Reaktionsgemische nicht zu handhaben ist.

Die Matrixkomponente eines SMC muss einige Voraussetzungen erfüllen. Die Harzstammpaste muss z.B. in der Lage sein, die Verstärkungsfasern vollständig einzubetten und die Weiterverarbeitung des daraus erhaltenen SMC zu Bau-/Formteilen bei möglichst niedrigen Temperaturen und niedrigen Drücken zu ermöglichen. Das SMC sollte nach dem Reifeprozess möglichst wenig bzw. gar nicht klebend sein, jedoch nicht vollständig ausgehärtet sein. Die Harzmatrix sollte also lediglich vorpolymerisiert (teilweise polymerisiert) sein, so dass sie noch schmelzbar ist, aber bei Berührung nicht mehr klebt. Nach der Härtung im Werkzeug sollte sich das so hergestellte Bauteil ohne Anhaftungen aus der Form entnehmen lassen. Die vernetzte Harzmatrix sollte eine hohe Grenzflächenhaftung zu den Verstärkungsfasern, aber nicht an der Werzeugform aufweisen. Ein Faserverbundbauteil sollte gute mechanische Eigenschaften, chemische Stabilität und Wärmeformbeständigkeit aufweisen.

SMC auf Basis ungesättigter Polyester und Vinylester sind aus US 5236976 A und WO 03/080319 A1 bekannt. Der Nachteil der in diesen Schriften verwendeten Harze ist, dass das Harz Styrol enthält und dass es während der Herstellung, der Verarbeitung sowie im fertigen Faserverbundbauteil zu Styrolausdünstungen kommt, die die Bauteilqualität sowie das Arbeitsumfeld negativ beeinflussen. Zudem sind die mechanischen Eigenschaften der hergestellten Faserverbundbauteile, insbesondere die Zugfestigkeit für viele Anwendungen nicht ausreichend.

WO 2015/165823 A1 beschreibt ein Polyurethan-Matrixmaterial, das mit internem Trennmittel ausgestattet ist, so dass Faserverbundbauteile ohne den Einsatz von externen Trennmitteln hergestellt werden können. Die Faserverbundbauteile sind erhältlich aus Fasern und Reaktionsharzmischungen mit einer Viskosität von 200 bis 700 mPas aus NCO-Prepolymeren, Polyolen, thermolatenten Katalysatoren sowie gegebenenfalls Additiven, wobei die Polyolseite mit internem Trennmittel ausgestattet ist. Das Fasermaterial und die Reaktionsmischung werden in eine oder beide Werkzeughälften eines Werkzeugs eingetragen und das Reaktivgemisch vollständig ausgehärtet.

In WO2014/170252 A1 werden Prepregs und ein Verfahren zur Herstellung von lagerstabilen Polyurethan-Prepregs (preimpregnated fibers) unter Verwendung von Polyolen mit hohem Anteil an sekundären Hydroxyl-Endgruppen und daraus hergestellte Faserverbundbauteile (Composite-Bauteile), die durch Imprägnieren von faserförmigen Materialien wie Geweben und Gelegen mit einem Polyurethanreaktivgemisch mit einer Viskosität von 30 bis 500 mPas erhältlich sind, beschrieben.

Aufgabe der vorliegenden Erfindung war es daher, ein Verfahren zur Herstellung von Faserverbundbauteilen, die geringe VOC-Werte aufweisen und gute mechanische Eigenschaften, wie z.B. hohe Temperaturstabilität, hohe Zugfestigkeit und gute Oberflächen, haben, zur Verfügung zu stellen, wobei das Verfahren einfach, möglichst kontinuierlich und kostengünstig sein sollte.

Überraschend wurde gefunden, dass die Herstellung von entsprechenden Faserverbundbauteilen auf Basis von speziellen Polyurethanen im SMC-Verfahren gelingt, wobei Verstärkungsfasern mit einem spezifischen, niedrigviskosen Polyurethanreaktivgemisch mit erhöhter Kennzahl (Verhältnis der NCO Gruppen zu den OH Gruppen) ummantelt und dann zu lagerstabilen SMC teilweise gehärtet werden. Diese SMC, die noch reaktiv sind, werden dann gegebenenfalls nach Zwischenlagerung in einer Werkzeugform zum Bauteil geformt und vollständig ausgehärtet. Die erfindungsgemäß hergestellten Bauteile sowie die entsprechenden SMC weisen keine bzw. geringe VOC-Werte auf.

In der vorliegenden Patentanmeldung wird unter SMC eine teilweise ausgehärtete faserverstärkte Polyurethan(PUR)schicht mit oder ohne Trägerfolien je nach Verfahrensstand verstanden.

Gegenstand der Erfindung ist daher ein Verfahren zur Herstellung eines Polyurethan basierten Faserverbundbauteiles mit folgenden Verfahrensschritten:
a) Herstellen eines Polyurethanreaktionsgemisches
b) Aufbringen des Reaktionsgemisches auf mindestens eine von zwei Trägerfolien
c) Beaufschlagen des Reaktionsgemisches auf der mindestens einen der zwei Trägerfolien mit Verstärkungsfasern
d) Zusammenführen der beiden Trägerfolien aus c), so dass die Trägerfolien das Reakionsgemisch mit den Verstärkungsfasern auf beiden Seiten umschließen und ein Sandwich entsteht,
e) Walken des Sandwich über Rollen und/oder Walzen,
   gegebenenfalls anschließendes Aufrollen zum sogenannten sheet-moulding compound (SMC) oder gegebenenfalls anschließendes Schneiden des Sandwich in sogenannte SMC-Stücke und Stapeln dieser SMC-Stücke
f) gegebenenfalls Lagerung des aufgerollten SMC oder des SMC-Stapels
g) Konfektionieren des Produktes aus Schritt e) oder f) und Entfernen der beiden Trägerfolien
h) gegebenenfalls Stapeln mehrerer Produkte aus Schritt g)
i) Formen und vollständiges Härten des Produktes aus Schritt g) oder h) in einem Pressformwerkzeug zum Faserverbundbauteil,
wobei das eingesetzte Polyurethanreaktionsgemisch aus folgenden Komponenten besteht
A) einer oder mehreren aromatischen Isocyanatkomponenten,
B1) 70 bis 100 Gew.-% einer oder mehreren Polyetherpolyolen mit 70 bis 100 % sekundären OH-Gruppen, bezogen auf sämtliche OH-Gruppen im Molekül, mit einer zahlenmittleren OH-Zahl von 15 bis 500 mg KOH/g (gemäß DIN EN ISO 53240, Teil 2, Version November 2007) und einer zahlenmittleren Funktionalität von 1,9 bis 2,5
B2) 0 bis 30 Gew.-% eines oder mehrerer Polyole ausgewählt aus der Gruppe bestehend aus Polyetherpolyolen, Polyesterpolyolen und Polycarbonatpolyolen mit einer zahlenmittleren OH-Zahl von 15 bis 500 mg KOH/g (gemäß DIN EN ISO 53240, Teil 2, Version November 2007) und einer zahlenmittleren Funktionalität von 1,9 bis 2,5, ausgenommen der Polyolkomponente B1), wobei die Summe aus B1) und B2) 100 Gew.-% ergibt und mindestens 70% der Gesamtheit der OH-Gruppen der Komponenten B1) und B2) sekundäre OH-Gruppen sind,
C) gegebenenfalls einem oder mehreren kurzkettigen Polyolen mit einer zahlenmittleren OH-Zahl von 550 bis 2000 mg KOH/g (gemäß DIN EN ISO 53240, Teil 2, Version November 2007) und einer zahlenmittleren Funktionalität von 1,9 bis 6,
D) einem oder mehreren internen Trennmitteln,
E) einem oder mehreren thermolatenten Katalysatoren, die bei Temperaturen von 50° bis 120°C, bevorzugt von 60 bis 100°C, katalytisch wirksam sind,
F) anorganischen Füllstoffen,
G) gegebenenfalls Hilfs- und/oder Zusatzstoffen,
dadurch gekennzeichnet, dass das Verhältnis der Anzahl der NCO-Gruppen der Komponente A) zu der Anzahl der OH-Gruppen der Komponenten B1), B2) und C) von 1,35:1 bis 10:1, bevorzugt von 1,4:1 bis 6,0:1 ist, der Gehalt an anorganischen Füllstoffen 20 bis 70 Gew.-%, bezogen auf das Polyurethanreaktionsgemisch, beträgt und das Polyurethanreaktionsgemisch bei 23°C eine Anfangsviskosität von 2500 bis 14000 mPas (gemessen nach DIN EN ISO 53019, Viskosimetrie - Messung von Viskositäten und Fließkurven mit Rotationsviskosimetern -Teil 1: Grundlagen und Messgeometrie, Version September 2008, Scherrate d/dt = 1 1/s) aufweist.

Ein weiterer Gegenstand der Erfindung ist ein sheet-moulding compound (SMC) bestehend aus zwei äußeren Trägerfolien und einem faserverstärkten Kern aus nicht vollständig ausgehärtetem Polyurethan, wobei der Kern 5 bis 40 Gew.-% Verstärkungsfasern und 60 bis 95 Gew.-% nicht vollständig ausgehärtetes Polyurethan enthält, wobei das Polyurethan aus einem Gemisch aus folgenden Komponenten besteht
A) einer oder mehreren aromatischen Isocyanatkomponenten,
B1) 70 bis 100 Gew.-% einer oder mehreren Polyetherpolyolen mit 70 bis 100 % sekundären OH-Gruppen, bezogen auf sämtliche OH-Gruppen im Molekül, mit einer zahlenmittleren OH-Zahl von 15 bis 500 mg KOH/g (gemäß DIN EN ISO 53240, Teil 2, Version November 2007) und einer zahlenmittleren Funktionalität von 1,9 bis 2,5,
B2) 0 bis 30 Gew.-% eines oder mehrerer Polyole ausgewählt aus der Gruppe bestehend aus Polyetherpolyolen, Polyesterpolyolen und Polycarbonatpolyolen mit einer zahlenmittleren OH-Zahl von 15 bis 500 mg KOH/g (gemäß DIN EN ISO 53240, Teil 2, Version November 2007) und einer zahlenmittleren Funktionalität von 1,9 bis 2,5, ausgenommen der Polyolkomponente B1), wobei die Summe aus B1) und B2) 100 Gew.-% ergibt und mindestens 70% der Gesamtheit der OH-Gruppen der Komponenten B1) und B2) sekundäre OH-Gruppen sind,
C) gegebenenfalls einem oder mehreren kurzkettigen Polyolen mit einer zahlenmittleren OH-Zahl von 550 bis 2000 mg KOH/g (gemäß DIN EN ISO 53240, Teil 2, Version November 2007) und einer zahlenmittleren Funktionalität von 1,9 bis 6,
D) einem oder mehreren internen Trennmitteln,
E) einem oder mehreren thermolatenten Katalysatoren, die bei Temperaturen von 50° bis 120°C, bevorzugt von 60 bis 100°C, katalytisch wirksam sind,
F) anorganischen Füllstoffen,
G) gegebenenfalls Hilfs- und/oder Zusatzstoffen,
dadurch gekennzeichnet, dass das Verhältnis der Anzahl der NCO-Gruppen der Komponente A) zu der Anzahl der OH-Gruppen der Komponenten B1), B2) und C) von 1,35:1 bis 10:1, bevorzugt von 1,4:1 bis 6,0:1 ist, der Gehalt an anorganischen Füllstoffen 20 bis 70 Gew.-%, bezogen auf das Polyurethanreaktionsgemisch, beträgt und das Polyurethanreaktionsgemisch bei 23°C eine Anfangsviskosität von 2500 bis 14000 mPas (gemessen nach DIN EN ISO 53019, Viskosimetrie - Messung von Viskositäten und Fließkurven mit Rotationsviskosimetern -Teil 1: Grundlagen und Messgeometrie,Version September 2008, Scherrate d/dt = 1 1/s) aufweist.

Das Reaktionsgemisch kann zum Beispiel auf Gießmaschinen mit Statikmischern oder mit dynamischen Mischern hergestellt werden.

Zur Herstellung der SMC wird zunächst ein homogenes Polyurethanreaktionsgemisch aus den Komponenten A) bis G) vorzugsweise bei Temperaturen von 10 bis 80°C, besonders bevorzugt von 18° bis 60°C hergestellt, das anschließend gegebenenfalls nach Abkühlung auf mindestens eine von zwei Trägerfolien aufgebracht wird. Danach wird das Reaktionsgemisch mit Verstärkungsfasern beaufschlagt. Die so beaufschlagten Trägerfolien werden zusammengelegt und dann wie üblich gewalkt, bevorzugt bei 15 bis 35 °C. Dadurch erfolgt eine Imprägnierung der Verstärkungsfasern mit dem Polyurethanreaktionsgemisch und gleichzeitig eine gute Verteilung der Fasern. Nach dieser Prozedur können die so hergestellten SMC bei Bedarf auf einer Rolle oder schichtweise gelagert werden und nach Konfektionierung und Entfernung der Trägerfolien zu einem späteren Zeitpunkt in einem Formwerkzeug bei Temperaturen von 90 bis 150°C zu den erfindungsgemäßen Faserverbundbauteilen geformt und vollständig ausgehärtet werden.

Der NCO-Wert des nicht vollständig ausgehärteten SMC gibt den Gewichtsanteil an nicht reagierten Isocyanatgruppen im Polyurethan an. Der NCO-Wert wird über einen Zeitraum von mehreren Wochen bestimmt. Dieser NCO-Wert ist ein gutes Indiz für die Lagerstabilität der SMC.

Der NCO-Wert der SMC wird wöchentlich über einen Zeitraum von 4 Wochen bestimmt. Der NCO-Wert der erfindungsgemäßen SMC liegt vorzugsweise in einem Bereich von 5 Gew.-% bis 16 Gew.-%, besonders bevorzugt von 6 Gew.-% bis 14 Gew.-% und ganz besonders bevorzugt von 8 Gew.-% bis 12 Gew.-%. Der NCO-Wert der SMC ändert sich, auch ohne Zusatz von externen Blockierungsmitteln beziehungsweise sogenannten Stoppern, vorzugsweise über einen Zeitraum von 4 Wochen nur geringfügig. Der NCO-Wert wird nach DIN EN ISO Kunststoffe - Polyurethanrohstoffe -Bestimmung des Isocyanatanteils (ISO 14896:2009); Deutsche Fassung EN ISO 14896:2009 bestimmt.

Die erfindungsgemäß eingesetzten Reaktionsgemische und die damit hergestellten SMC enthalten weder Lösungsmittel noch leichtflüchtige Bestandteile, so dass die VOC (volatile organic components)-Werte gering sind.

Mit den erfindungsgemäß eingesetzten Polyurethanreaktionsgemischen ist ein schnelles Aushärten (z.B. innerhalb von 120 Sekunden) der entsprechenden SMC bei niedrigen Temperaturen (90 bis 150°C ) und damit eine schnelle Fertigung der Faserverbundbauteile möglich.

Die erfindungsgemäß hergestellten SMC weisen eine hohe Lagerstabilität von mehreren Wochen bei Raumtemperatur auf und können einfach weiterverarbeitet werden.

Die SMC können nach Abtrennung der Trägerfolien in Form einer Schicht und in Form mehrerer über einander liegender Schichten zu einem erfindungsgemäßen Faserverbundbauteil weiter verarbeitet werden. Vor der vollständigen Vernetzung des Polyurethanmatrixmaterials werden die SMC vor dem Abtrennen der Trägerfolien vorzugsweise zugeschnitten, um dann in einer geeigneten Form unter Druck, gegebenenfalls unter Anlegen von Vakuum verpresst zu werden. Dadurch werden die SMC gleichmäßig in der Form verteilt. Die Herstellung der Faserverbundbauteile aus den SMC erfolgt vorzugsweise bei Temperaturen von 90°C bis 150°C bevorzugt von 110° bis 140°C, besonders bevorzugt von 110° bis 135°C und einem Druck von 1 bis 150 bar, bevorzugt von 1 bis 110 bar und besonders bevorzugt von 1 bis 100 bar innerhalb von vorzugsweise 1 bis 6 Minuten, bevorzugt von 1 bis 4 Minuten.

Während der Verarbeitung der SMC zu den Faserverbundbauteilen im Formwerkzeug erfolgt durch Aufschmelzen des teilweise gehärteten Polyurethanmatrixmaterials eine zusätzliche Imprägnierung der Verstärkungsfasern sowie eine gute Verteilung in der Werkzeugform, bevor durch die vollständige Härtung (Vernetzung) des Polyurethanreaktionsgemisches die komplette Polyurethanmatrix durchhärtet. Die Kavität der Werkzeugform kann zusätzlich mit einem externen Trennmittel versehen werden, bevor die von den Trägerfolien befreiten SMC eingelegt werden. Es können weitere Schutz- oder Dekor-Schichten vor dem Einbringen des von den Trägerfolien befreiten SMC in das Werkzeug eingelegt werden, wie beispielsweise eine oder mehrere Gelcoatschichten.

Die erfindungsgemäß hergestellten Faserverbundbauteile können in unterschiedlichen Anwendungen im Bereich der Bau-, der Elektro-, der Automobil- (z.B. Karosseriebauteile), der Luft- und Raumfahrt-Industrie (Flugzeugbau), des Strassenbaus (z.B. Kanaldeckel), der Energietechnik (Windkraftanlagen; z.B. Rotorblätter), im Boots- und Schiffbau und in hochbelasteten Strukturen eingesetzt werden.

Besonders bevorzugt ist ein Faserverbundbauteil, dessen Polyurethan aus 20-50 Gew.-%, bevorzugt 22-45 Gew.-% Isocyanaten (A), 10-40 Gew.-%, bevorzugt 12-30 Gew.-% Polyolen (B1 und B2), 0,1-5 Gew.-%, bevorzugt 0,1-4 Gew.-% internen Trennmitteln (D), 0,1-3 Gew.-%, bevorzugt 0,3-1,4 Gew.-% Katalysator (E), 20-70 Gew.-%, bevorzugt 20-65 Gew.-% Füllstoff (F) und 0-3 Gew.-%, bevorzugt 0-1,5 Gew.-% Hilfs- und/oder Zusatzstoffen (G) erhältlich ist, wobei die Summe der Gewichtsanteile der Komponenten A) bis G) 100 Gew.-% ergibt.

Der Faseranteil im Faserverbundteil beträgt vorzugsweise 5 bis 40 Gew.-%, besonders bevorzugt 15 Gew.-% bis 40 Gew.-%, ganz besonders bevorzugt 25 bis 35 Gew.%, bezogen auf das Gesamtgewicht des Faserverbundbauteils.

Das PUR-Reaktionsgemisch weist bei 23°C eine Anfangsviskosität von 2500 bis 14000 mPas (gemessen nach DIN EN ISO 53019, Viskosimetrie -Messung von Viskositäten und Fließkurven mit Rotationsviskosimetern -Teil 1: Grundlagen und Messgeometrie,Version September 2008, Scherrate d/dt = 1 1/s) auf, bevorzugt 5000 bis 11000 mPas, besonders bevorzugt 5500 bis 9000 mPas.

Als aromatische Isocyanatkomponente A) kommen die üblichen aromatischen Di- und/oder Polyisocyanate zum Einsatz. Beispiele solcher geeigneten Polyisocyanate sind 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder deren höhere Homologen (pMDI), 1,3- und/oder 1,4-Bis-(2-isocyanato-prop-2-yl)-benzol (TMXDI), 1,3-Bis-(isocyanatomethyl)benzol (XDI). Als Isocyanat wird vorzugsweise Diphenylmethandiisocyanat (MDI) und insbesondere Gemische aus Diphenylmethandiisocyanat und Polyphenylenpolymethylenpolyisocyanat (pMDI) verwendet. Neben den vorstehend genannten Isocyanaten können auch modifizierte Isocyanate, wie z.B. mit Alkoholen, insbesondere mit Polyetherpolyolen oder Polyesterpolyolen hergestellte Isocyanatprepolymere, sowie z.B. solche mit Uretdion-, Isocyanurat-, Carbodiimid-, Uretonimin-, Allophanat- oder Biuretstruktur eingesetzt werden. Die modifizierte Isocyanatkomponente hat vorzugsweise einen Monomergehalt zwischen 35 und 55 Gew.-%, bevorzugt zwischen 40 und 50 Gew.-%, besonders bevorzugt zwischen 43 und 49 Gew.-%. Der NCO-Gehalt der als Isocyanatkomponente A) verwendeten Prepolymere liegt vorzugsweise bei 27 bis 31 Gew.-%, bevorzugt 28-31 Gew.-%. Der Gehalt an Estergruppen in den bevorzugt eingesetzten Prepolymeren auf Basis Polyesterpolyole liegt vorzugweise zwischen 5 bis 7,5 Gew.-%. Der NCO-Gehalt wird nach DIN EN ISO Kunststoffe -Polyurethanrohstoffe - Bestimmung des Isocyanatanteils (ISO 14896:2009); Deutsche Fassung EN ISO 14896:2009 bestimmt. Die Viskosität des Prepolymers gemessen nach DIN EN ISO 53019 (Viskosimetrie - Messung von Viskositäten und Fließkurven mit Rotationsviskosimetem -Teil 1: Grundlagen und Messgeometrie, Version September 2008, Scherrate d/dt = 100 l/s) liegt vorzugsweise bei 30 bis 250 mPas (bei 20°C), besonders bevorzugt 30 bis 200 mPas (bei 20°C) und ganz besonders bevorzugt 30 bis 170 mPas (bei 20°C) .

Die OH-Zahl der Polyolkomponente B1) gibt im Falle eines einzelnen eingesetzten Polyols dessen OH-Zahl an. Im Falle von Mischungen wird die zahlenmittlere OH-Zahl der Mischung angegeben. Dieser Wert wird gemäß DIN EN ISO 53240 Bestimmung der Hydroxylzahl -Teil 2: Verfahren mit Katalysator, Version November 2007 bestimmt.

Die Polyolkomponente (Polyol oder Polyolgemisch) B1) weist eine OH-Zahl (OHZ), gegebenenfalls eine mittlere OHZ von 15 bis 500 mg KOH/g, bevorzugt von 50 bis 400 mg KOH/g und besonders bevorzugt von 60 bis 300 mg KOH/g auf. Bevorzugt hat die eingesetzte Polyolkomponente eine zahlenmittlere Funktionalität von 1,9 bis 2,5. Unter Funktionalität wird im Rahmen dieser Anmeldung die Anzahl von NCO-reaktiven Gruppen pro Molekül verstanden.

Die Polyolkomponente B1) enthält mindestens ein Polyol, dessen Anteil an endständigen sekundären OH-Gruppen 70 bis 100 %, bevorzugt 80-100 %, bezogen auf die gesamten OH-Gruppen im Molekül, beträgt. Erfindungsgemäß werden Polyetherpolyole eingesetzt.

Als Polyolkomponente B2) werden bevorzugt Polyetherpolyole, Polyesterpolyole, Polyetheresterpolyole oder Polycarbonatpolyole mit mittleren OHZ von 15 bis 500 mg KOH/g, bevorzugt von 50 bis 400 mg KOH/g und besonders bevorzugt von 60 bis 300 mg KOH/g und zahlenmittleren Funktionalitäten von 1,9 bis 2,5 eingesetzt, wobei die Komponente B2) nicht identisch mit der Komponente B1) ist.

Als Komponente C) können insbesondere Alkohole (z.B. Ethylenglykol, Glycerin) und/oder Polyetherpolyole mit einer zahlenmittleren Funktionalität von 1,9 - 6. eingesetzt werden.. Die OH-Zahl der Komponente C) gibt im Falle einer einzelnen eingesetzten Verbindung deren OH-Zahl an. Im Falle von Mischungen wird die zahlenmittlere OH-Zahl der Mischung angegeben. Die OHZ wird gemäß DIN EN ISO 53240 Bestimmung der Hydroxylzahl -Teil 2: Verfahren mit Katalysator, Version November 2007 bestimmt.

Die Komponente C) weist eine OH-Zahl (OHZ), gegebenenfalls zahlenmittlere OHZ von 550 bis 2000 mg KOH/g, bevorzugt von 550 bis 1950 mg KOH/g und besonders bevorzugt von 550 bis 1850 mg KOH/g auf. Bevorzugt hat die eingesetzte Komponente C) eine zahlenmittlere Funktionalität von 1,9 bis 6. Besonders bevorzugt werden als Komponente C) Verbindungen mit Molekulargwichten von 60 bis 499 und 3 oder mehr aktiven H-Atomen eingesetzt, die als Vernetzungsmittel fungieren, wie z.B. Glyzerin, Trimethylolpropan, Pentaerythrit und deren Alkoxylierungsprodukte.

Als interne Trennmittel D) kommen zum Beispiel Fettsäureester, Produkte, die aus Salzen von aliphatischen Carbonsäuren, welche mit vorzugsweise primären Amin- oder Amid- oder Estergruppen enthaltenden Aminen umgesetzt werden, bestehen oder Metallsalze einer Carbonsäure, einer Amidocarbonsäure, einer Phosphorsäure oder einer Borsäure in Kombination mit bestimmten tertiären Aminen zum Einsatz. Derartige interne Trennmittel sind beispielsweise bekannt aus WO 99/16602 A.

Als thermolatente Katalysatoren E) werden bevorzugt Katalysatoren eingesetzt, die im Bereich zwischen 50°C und 120°C katalytisch aktiv sind. Typische thermolatente Katalysatoren sind beispielsweise blockierte Amin- und Amidin-Katalysatoren der Hersteller Air Products (wie z.B. Polycat® SA-1/10 (Phenol-blockiertes 1,8-Diazabicyclo[5.4.0]undec-7-en (=DBU)), Polycat® SA 102/10, Dabco KTM 60, DABCO® 8154 (Ameisensäure-blockiertes Triethylendiamin) oder DABCO® WT) und Tosoh Corporation (wie z.B. Toyocat® DB 2, DB 30, DB 31, DB 40, DB 41, DB 42, DB 60, DB 70) und Huntsman Corporation (wie z.B. Accelerator DY 9577). Es können aber auch andere thermolatente Katalysatoren, die aus der Polyurethanchemie bekannt sind, mit einer sogenannten Schalttemperatur von 50°C bis 120°C eingesetzt werden. Als thermolatente Katalysatoren E) können die bekannten Katalysatoren, meist Basen (tertiäre Amine, Salze schwacher Säuren wie Kaliumacetat) und organische Metallverbindungen eingesetzt werden. Derartig bekannte thermolatente Katalysatoren sind beispielsweise bekannt aus WO 2009/132784 A. Weitere Vertreter von thermolatenten Katalysatoren sowie Einzelheiten über die Wirkungsweise dieser Katalysatoren sind im Kunststoff-Handbuch, Band VII "Polyurethane", 3. Auflage, Carl Hanser Verlag, München / Wien, 1993 auf den Seiten 104 - 110 beschrieben.

Als Füllstoffe F) kommen zum Beispiel natürliche, gemahlene Mineralien, Metalloxide, Silikate, Sulfate, Carbonate, Kieselsäure, Kieselgur, Quarzmehl, oder Mischungen aus zwei oder mehreren dieser Füllstoffe in Betracht. Bevorzugte Metalloxide sind Titandioxid, Zinkoxid, Aluminiumoxid und Magnesiumoxid. Bevorzugte Sulfate sind Bariumsulfat und Calciumsulfat. Bevorzugte Silikate sind Talk, Kaolin, Mica und Wollastonit. Bevorzugte Carbonate sind Carbonate der Erdalkalimetalle.

Gegebenenfalls können Hilfs- und/oder Zusatzstoffe (Additive) G) zugesetzt werden. Hierbei handelt es sich beispielsweise um Entlüfter, Entschäumer, Fließhilfen, organische oder anorganische Farbstoffe, Treibmittel. Weitere bekannte Additive und Zusatzmittel, die bei Bedarf verwendet werden können, sind im Polyurethane Handbook, 2nd Edition, Günter Oertel, Carl Hanser Verlag, München / Wien / New York, 1994 auf den Seiten 98 - 119 beschrieben.

Als Verstärkungsfasern können geschlichtete oder ungeschlichtete Fasern, beispielsweise Glasfasern, Kohlefasern, Metallfasern (z.B. Stahl- bzw. Eisenfasern), Naturfasern, Aramidfasern, Polyethylenfasern, Basaltfasern eingesetzt werden. Die Fasern können als Gewebe, Gelege, Geflechte, Matten, Vliese, Gestricke und/ oder Kurzfasern mit einer Länge von 0,1 bis 50 mm verwendet werden, bevorzugt sind kurzfaserverstärkte Verbundbauteile. Bei der Verwendung von SMC mit einer definierten Faserorientierung, besteht die Möglichkeit durch entsprechende Schichtung mehrerer SMC unterschiedliche Ausrichtungen der Fasern im Bauteil wie beispielsweise unidirektional und/oder multidirektional zu erhalten.

Die Erfindung soll anhand der nachfolgenden Beispiele näher erläutert werden.

### Beispiele:

### Verwendete Messgeräte und Normen:

Bestimmung der Hydroxylzahl gemäß DIN EN ISO 53240,-Teil 2: Verfahren mit Katalysator, Version November 2007
Bestimmung des NCO Gehaltes (Kunststoffe -Polyurethanrohstoffe) - gemäß DIN EN ISO 14896 von 2009
Zugversuch nach DIN EN ISO 527: Kunststoffe - Bestimmung der Zugeigenschaften - Teil 1: Allgemeine Grundsätze (ISO 527-1 von 2012)
Verfahren zur Bestimmung der Dichte von nicht verschäumten Kunststoffen gemäß DIN EN ISO 1183-1 von 2012 - Teil 1: Eintauchverfahren, Verfahren mit Flüssigkeitspyknometer und Titrationsverfahren
HDT-Bestimmung nach ISO 75 - 1/75 von 2004; Verfahren A (flachkant)
Bestimmung des Textilglas- und Mineralfüllstoffgehalts gemäß DIN EN ISO 1172 von 1996; Textilglasverstärkte Kunststoffe - Prepregs, Formmassen und Laminate, Kalzinierungsverfahren
Viskositätsbestimmung gemäß DIN 53019-1 von 2008-09 (H << R), d/dt = Scherrate, Platte - Platte Messsystem PP 25, Messung in Rotation bei 23 °C . Es wurde das Rheometer "MCR 501" der Firma Anton Paar für die Messung verwendet.

Bestimmung des VOC-Wertes gemäß technischer Regel VDA 278 - Thermodesorptionsanalyse organischer Emissionen zur Charakterisierung von nichtmetallischen KFZ-Werkstoffen, Ausgabedatum 01.10.2011. Die SMC wurden vor der Messung nicht wie in der VDA 278 beschrieben 7 Tage bei max. 23°C offen gelagert, sondern unmittelbar nach der Herstellung vermessen.

Ermittlung der Gelzeit (t_{g}): Mittels eines Geltimers "Gardco" der Firma Paul N. Gardner, Model GT-SHP-220 wird die Gelzeit des PUR-Reaktionsgemisches ermittelt. Das Gerät besteht aus einem Rührer, der in die Reaktionsmischung eintaucht und durch einen elektrischen Motor angetrieben wird. Sobald das für dieses Gerät spezifische maximale Drehmoment (das PUR-Reaktionsgemisch liegt nun hochviskos bzw. fest vor) erreicht wird, stoppt der Motor, und die Gelzeit kann am Gerät abgelesen werden.

### Allgemeine Herstellungsvorschrift:

Es wurden SMC aus Polyisocyanaten, Polyolen, Füllstoffen, Additiven, latenten Katalysatoren und Verstärkungsfasern hergestellt und anschließend zu einem erfindungsgemäßen Faserverbundbauteil geformt und ausgehärtet. Für die Herstellung der SMC wurde jeweils eine dünne Schicht eines Polyurethanreaktionsgemisches auf 2 Trägerfolien aufgetragen. Danach wurden auf die eine Schicht aus Polyurethanreaktionsgemisch Verstärkungsfasern gerieselt. Beide Trägerfolien wurden mit den Polyurethanschichten zusammengeführt, so dass sich die PUR-Schichten als Kernlage zwischen den Trägerfolien befanden. Das so erhaltene Sandwich wurde gewalkt, wobei das PUR-Reaktionsgemisch teilweise aushärtete. Das SMC wurde in 10 x 20 cm Stücke konfektioniert und die Trägerfolien abgezogen. 4 dieser konfektionierten SMC-Stücke wurden danach aufeinander gelegt und anschließend bei 130°C und 5 bar in einem Presswerkzeug zu einem Faserverbundbauteil mit einer Wandstärke von 4 mm innerhalb einer Zeit von 120 Sekunden verpresst.

Das NCO/OH Verhältnis gibt das Verhältnis der Anzahl der NCO-Gruppen in der Polyisocyanatkomponente A) zu der Anzahl der OH-Gruppen in der Komponente B) an.

Die Details (wie Mengenangaben und Eigenschaften) sind der Tabelle zu entnehmen.

Die Gelzeit (t_{g}) des homogen vermischten PUR-Reaktionsgemisches wurde mittels Geltimer bestimmt, wobei 75g eingesetzt wurden.

Aus den hergestellten Faserverbundbauteilen wurden Probenkörper für den Zugversuch nach DIN EN ISO 527: Kunststoffe - Bestimmung der Zugeigenschaften - Teil 1: Allgemeine Grundsätze (ISO 527-1:2012); hergestellt. Außerdem wurde die Wärmeformbeständigkeit (HDT nach DIN EN ISO 75 - 1/75 2004, Verfahren A (flachkant) sowie die Dichte nach Verfahren zur Bestimmung der Dichte von nicht verschäumten Kunststoffen - Teil 1: Eintauchverfahren, Verfahren mit Flüssigkeitspyknometer und Titrationsverfahren (ISO 1183-1:2012) bestimmt. Die Summe des Glasfaser- und Füllstoffgehaltes der Formkörper wurde durch Veraschung der Probenkörper nach DIN EN ISO 1172: Textilglasverstärkte Kunststoffe - Prepregs, Formmassen und Laminate, Bestimmung des Textilglas- und Mineralfüllstoffgehalts Kalzinierungsverfahren (ISO 1172 : 1996) bestimmt.

Die Viskosität des PUR-Reaktionsgemisches wurde direkt sowie 15 Minuten nach dem Vermischen der Komponenten mit einem Rotationsviskosimeter bei 23°C mit einer Scherrate von 1 1/s nach DIN EN ISO 53019, Viskosimetrie -Messung von Viskositäten und Fließkurven mit Rotationsviskosimetern -Teil 1: Grundlagen und Messgeometrie, Version September 2008, Scherrate d/dt = 1 1/s bestimmt.

Zur Bestimmung des VOC - Wertes wurden Probekörper (30x3x3 mm) der SMC unmittelbar nach der Herstellung gemäß technischer Regel VDA 278 - Thermodesorptionsanalyse organischer Emissionen zur Charakterisierung von nichtmetallischen KFZ-Werkstoffen vermessen.

### Beispiel 1:

33 g eines Polyetherpolyols mit einer OH-Zahl von 112 mg KOH/g mit 95 %, bezogen auf alle OH-Gruppen, sekundären OH - Gruppen und einer zahlenmittleren Funktionalität von 2 (Viskosität bei 25 °C: 140 mPas; 1,2-Propylenglykol als Starter; Propylenoxidbasis, Handelsname DESMOPHEN® PE 9015 - Produkt der Firma Covestro Deutschland AG), 0,3 g Edenor® TI 05 (Additiv: Ölsäure dest.; Produkt der Fa. Cognis GmbH) und 1,0g Toyocat® DB40 (thermolatenter Katalysator: blockiertes Amin der Firma TOSOH Corporation) wurden homogen vermischt. Anschließend wurden 29,9g Füllstoff Millicarb® OG (Calciumcarbonat: Produkt der Fa. Omya) zugegeben und vermischt. Gleichzeitig wurden zu 55,4g Desmodur® 44P01 (Polyisocyanat der Firma Covestro Deutschland AG; f=2,68; NCO-Gehalt: 29,15 Gew.-%; Viskosität bei 20 °C: 135 mPas) 89,7g des Füllstoffes Millicarb® OG (Calciumcarbonat: Produkt der Fa. Omya) gegeben und vermischt. Die beiden Mischungen wurden zusammen gegeben. Die so hergestellte Reaktionsmischung hatte einen Füllstoffgehalt von 57,1 Gew.% und wurde auf 2 Trägerfolien aus Polyethylen aufgetragen. Auf eine der beschichteten Folien wurden Verstärkungsfasern (27 mm Schnittglas aus Vetrotex® EC 2400/P207) gerieselt. Beide Trägerfolien wurden zusammengelegt, so dass ein Sandwich mit einer inneren Schicht aus PUR-Reaktionsgemisch zwischen zwei Trägerfolien entstand. Das Sandwich wurde gewalkt, um eine gute Verteilung der Fasern zu erreichen. Die innere Polyurethanschicht hatte einen Verstärkungsfasergehalt von 30 Gew.% und einen NCO-Wert nach 7 Tagen von 10,5 Gew.-%. Das SMC wurde in 10 x 20 cm Stücke konfektioniert, die Trägerfolien abgezogen, 4 dieser konfektionierten SMC-Stücke aufeinander gelegt und anschließend bei 130°C und 5 bar in einem Werkzeug zu einem Faserverbundbauteil verpresst.

Um die Gelzeit des Reaktionsgemisches sowie den Viskositätsverlauf bei 23 °C zu bestimmen, wurde das Reaktionsgemisch ohne vorheriges Entgasen der Ausgangskomponenten in einem Pappbecher für 10 Sekunden gerührt, bis das Gemisch homogen vorlag. Das Gemisch wurde zur Bestimmung der Gelzeit bzw. der Viskosität in den Geltimer bzw. das Rheometer überführt.

### Vergleichsbeispiel 2:

33 g eines Polyetherpolyols mit einer OH-Zahl von 190 mg KOH/g mit 95 % primären OH - Gruppen, bezogen auf die gesamte Anzahl der OH-Gruppen, und einer zahlenmittleren Funktionalität von 2 (Viskosität bei 25 °C: 120 mPas; 1,2-Propylenglykol als Starter; Ethylenoxidbasis, Handelsname DESMOPHEN® L 300, Produkt der Firma Covestro Deutschland AG), 0,3 g Edenor® TI 05 (Additiv: Ölsäure dest.; Produkt der Fa. Cognis GmbH) und 1,0g Toyocat® DB40 (thermolatenter Katalysator: blockiertes Amin der Firma TOSOH Corporation) wurden homogen vermischt. Anschließend wurden 34,3g des Füllstoffes Millicarb® OG (Calciumcarbonat: Produkt der Fa. Omya) zugegeben. Gleichzeitig wurden zu 68,7g Desmodur® 44P01 (Polyisocyanat der Firma Covestro Deutschland AG; f=2,68; NCO-Gehalt 29,15 Gew.-%; Viskosität bei 20 °C: 135 mPas) 103g des Füllstoffes Millicarb® OG (Calciumcarbonat: Produkt der Fa. Omya) gegeben und homogen vermischt. Die beiden Mischungen wurden zusammengegeben. Die so hergestellte Reaktionsmischung hatte einen Füllstoffgehalt von 57,1 Gew.% und wurde auf 2 Trägerfolien aus Polyethylen aufgetragen. Auf eine der beschichteten Folien wurden Verstärkungsfasern (27 mm Schnittglas aus Vetrotex EC 2400/P207) gerieselt. Beide Trägerfolien wurden zusammengelegt, so dass ein Sandwich mit einer inneren Schicht aus PUR-Reaktionsgemisch zwischen zwei Trägerfolien entstand. Ziel war ein Verstärkungsfasergehalt der inneren Polyurethanschicht von 30 Gew.%. Aufgrund der hohen Reaktivität und dem sehr schnellen Viskositätsanstieg war ein Walken des Sandwiches, um eine gute Verteilung der Fasern zu erreichen, nicht mehr möglich. Die Herstellung eines SMC und somit eines Faserverbundbauteils war nicht möglich.

Um die Gelzeit des Reaktionsgemisches sowie den Viskositätsverlauf bei 23 °C zu bestimmen, wurde das Reaktionsgemisch ohne vorheriges Entgasen der Ausgangskomponenten in einem Pappbecher für 10 Sekunden gerührt, bis ein homogenes Reaktionsgemisch vorlag. Das Gemisch wurde zur Bestimmung der Gelzeit bzw. der Viskosität in den Geltimer bzw. das Rheometer überführt.

### Vergleichsbeispiel 3: Daten aus US 5236976 A, Beispiel 7

### Vergleichsbeispiel 4:

33 g eines Polyesterpolyols mit einer OH-Zahl von 110 mg KOH/g mit 95 %, bezogen auf alle OH-Gruppen, sekundären OH - Gruppen und einer zahlenmittleren Funktionalität von 2 (Viskosität bei 25 °C: 11500 mPas; Produkt aus Adipinsäure und 2,3-Butandiol, Versuchsprodukt der Firma Covestro Deutschland AG), 0,3 g Edenor® TI 05 (Additiv: Ölsäure dest.; Produkt der Fa. Cognis GmbH) und 1,0g Toyocat® DB40 (thermolatenter Katalysator: blockiertes Amin der Firma TOSOH Corporation) wurden homogen vermischt. Anschließend wurden 29,9g Füllstoff Millicarb® OG (Calciumcarbonat: Produkt der Fa. Omya) zugegeben und vermischt. Gleichzeitig wurden zu 55,4g Desmodur® 44P01 (Polyisocyanat der Firma Covestro Deutschland AG; f=2,68; NCO-Gehalt: 29,15 Gew.-%; Viskosität bei 20 °C: 135 mPas) 89,7g des Füllstoffes Millicarb® OG (Calciumcarbonat: Produkt der Fa. Omya) gegeben und vermischt. Die beiden Mischungen wurden zusammen gegeben. Die so hergestellte Reaktionsmischung hatte einen Füllstoffgehalt von 57,1 Gew.% und wurde auf 2 Trägerfolien aus Polyethylen aufgetragen. Auf eine der beschichteten Folien wurden Verstärkungsfasern (27 mm Schnittglas aus Vetrotex® EC 2400/P207) gerieselt. Beide Trägerfolien wurden zusammengelegt, so dass ein Sandwich mit einer inneren Schicht aus PUR-Reaktionsgemisch zwischen zwei Trägerfolien entstand. Ziel war ein Verstärkungsfasergehalt der inneren Polyurethanschicht von 30 Gew.%. Aufgrund der hohen Viskosität und dem sehr schnellen Viskositätsanstieg war ein Walken des Sandwiches, um eine gute Verteilung der Fasern zu erreichen, nicht mehr möglich. Die Herstellung eines SMC und somit eines Faserverbundbauteils war ebenfalls nicht möglich.

Um die Gelzeit des Reaktionsgemisches sowie den Viskositätsverlauf bei 23 °C zu bestimmen, wurde das Reaktionsgemisch ohne vorheriges Entgasen der Ausgangskomponenten in einem Pappbecher für 10 Sekunden gerührt, bis das Gemisch homogen vorlag. Das Gemisch wurde zur Bestimmung der Gelzeit bzw. der Viskosität in den Geltimer bzw. das Rheometer überführt.

**Tabelle 1:**

| Beispiele | Beispiel 1 | Vergleichsbeispiel 2 | Vergleichsbeispiel 3* | Vergleichsbeispiel 4 |
|---|---|---|---|---|
| NCO/OH Äquivalentverhältnis | 5,38:1 | 4,1:1 | - | 5,38:1 |
| Berechneter Rest NCO - Gehalt des Reaktionsgemisches direkt nach der Herstellung | 14,7 % | 14,7 % | - | 14,7% |
| t_{g} bei 23 °C [min] | 117 | 11 | - | - |
| Viskosität bei 23°C (direkt nach dem Vermischen) [mPas]; gemessen nach DIN EN ISO 53019 (d/dt = 1 1/s) | 6940 | 9300 | - | 254000 |
| Viskosität bei 23°C (15 min. nach dem Vermischen) [mPas]; gemessen nach DIN EN ISO 53019(d/dt = 1 1/s) | 11100 | 51400 | - | 500000 |
| NCO-Wert des SMC [nach Tagen]; gemessen nach DIN EN ISO 14896:2009-07-Verfahren A [Gew.-%] | nach 7 Tagen: 10,7 nach 14 Tagen: 10,6 nach 21 Tagen: 10,0 nach 28 Tagen: 9,8 | - | - | - |
| Zugversuch nach EN ISO 527-1:2012 | | | | |
| Zug-Modul [MPa] | 13601 | - | 13100 | - |
| Zugfestigkeit bei F max.[MPa] | 142 | - | 85 | - |
| HDT A (ISO 75- 1/75 2004) flachkant [°C] | 219 | - | - | - |
| Dichte nach DIN EN ISO 1183-1 [kg/m³] | 1900 | - | - | - |
| VOC-Wert (Toluol Äquivalent) nach VDA 278 [mg/kg] | 73 | - | - | - |

| | | | | |
|---|---|---|---|---|
| * Daten aus US 5236976 A, Beispiel 7 | | | | |

Die Lagerstabilität des SMC aus Beispiel 1 wurde anhand des NCO-Wertes [in Gew.-%] ermittelt. Aus den Werten aus der Tabelle 1 geht hervor, dass die Vernetzungsfähigkeit des SMC durch die Lagerung bei Raumtemperatur über einen Zeitraum von 4 Wochen nicht beeinträchtigt wurde. Nur erfindungsgemäße SMC aus ausgewählten Polyurethanreaktionsgemischen können zu Bauteilen weiterverarbeitet werden, wie die Vergleichsbeispiele zeigen.

Im Vergleichsbeispiel 2 wurde anstatt des Polyetherpolyols aus Beispiel 1 ein Polyetherpolyol mit etwa 95 % primären OH-Endgruppen verwendet. Die molare Menge an latentem Katalysator Toyocat® DB 40 blieb unverändert. Das resultierende Reaktionsgemisch reagierte bei Raumtemperatur innerhalb weniger Minuten fast komplett ab, so dass die Herstellung weder eines SMC noch eines Faserverbundbauteils möglich war.

Im Vergleichsbeispiel 4 wurde anstelle des Polyetherpolyols aus Beispiel 1 ein Polyesterpolyol mit einer OH-Zahl von 110 mg KOH/g und einer Funktionalität von 2 eingesetzt. Die übrigen Komponenten blieben unverändert. Aufgrund der hohen Viskosität und dem schnellen Viskositätsanstieg waren weder ein Walken noch eine Verteilung der Fasern nicht möglich.

## Patentansprüche

1. Verfahren zur Herstellung eines Polyurethan basierten Faserverbundbauteiles mit folgenden Verfahrensschritten:
a) Herstellen eines Polyurethanreaktionsgemisches
b) Aufbringen des Reaktionsgemisches auf mindestens eine von zwei Trägerfolien
c) Beaufschlagen des Reaktionsgemisches auf der mindestens einen der zwei Trägerfolien mit Verstärkungsfasern
d) Zusammenführen der beiden Trägerfolien aus c), so dass die Trägerfolien das Reakionsgemisch mit den Verstärkungsfasern auf beiden Seiten umschließen und ein Sandwich entsteht,
e) Walken des Sandwich über Rollen und/oder Walzen,
gegebenenfalls anschließendes Aufrollen zum sogenannten sheet-moulding compound (SMC) oder gegebenenfalls anschließendes Schneiden des Sandwich in sogenannte SMC-Stücke und Stapeln dieser SMC-Stücke
f) gegebenenfalls Lagerung des aufgerollten SMC oder des SMC-Stapels
g) Konfektionieren des Produktes aus Schritt e) oder f) und Entfernen der beiden Trägerfolien
h) gegebenenfalls Stapeln mehrerer Produkte aus Schritt g)
i) Formen und vollständiges Härten des Produktes aus Schritt g) oder h) in einem Pressformwerkzeug zum Faserverbundbauteil,
wobei das eingesetzte Polyurethanreaktionsgemisch aus folgenden Komponenten besteht
A) einer oder mehreren aromatischen Isocyanatkomponenten,
B1) 70 bis 100 Gew.-% einer oder mehreren Polyolkomponenten ausgewählt aus der Gruppe bestehend aus Polyetherpolyolen, Polyesterpolyolen und Polycarbonatpolyolen mit 70 bis 100 % sekundären OH-Gruppen, bezogen auf sämtliche OH-Gruppen im Molekül, mit einer zahlenmittleren OH-Zahl von 15 bis 500 mg KOH/g (gemäß DIN EN ISO 53240, Teil 2, Version November 2007) und einer zahlenmittleren Funktionalität von 1,9 bis 2,5,
B2) 0 bis 30 Gew.-% eines oder mehrerer Polyole ausgewählt aus der Gruppe bestehend aus Polyetherpolyolen, Polyesterpolyolen und Polycarbonatpolyolen mit einer zahlenmittleren OH-Zahl von 15 bis 500 mg KOH/g (gemäß DIN EN ISO 53240, Teil 2, Version November 2007) und einer zahlenmittleren Funktionalität von 1,9 bis 2,5, ausgenommen der Polyolkomponente B1),
wobei die Summe aus B1) und B2) 100 Gew.-% ergibt und mindestens 70% der Gesamtheit der OH-Gruppen der Komponenten B1) und B2) sekundäre OH-Gruppen sind,
C) gegebenenfalls einem oder mehreren kurzkettigen Polyolen mit einer zahlenmittleren OH-Zahl von 550 bis 2000 mgKOH/g (gemäß DIN EN ISO 53240, Teil 2, Version November 2007) und einer zahlenmittleren Funktionalität von 1,9 bis 6,
D) einem oder mehreren internen Trennmitteln,
E) einem oder mehreren thermolatenten Katalysatoren, die bei Temperaturen von 50° bis 120°C, bevorzugt von 60 bis 100°C, katalytisch wirksam sind,
F) anorganischen Füllstoffen,
G) gegebenenfalls Hilfs- und/oder Zusatzstoffen,
**dadurch gekennzeichnet, dass** das PUR-Reaktionsgemisch bei 23°C eine Anfangsviskosität von 2500 bis 14000 mPas (gemessen nach DIN EN ISO 53019, Viskosimetrie -Messung von Viskositäten und Fließkurven mit Rotationsviskosimetern, Teil 1: Grundlagen und Messgeometrie,Version September 2008, Scherrate d/dt = 1 1/s) aufweist, der Gehalt an anorganischen Füllstoffen 20 bis 70 Gew.-%, bezogen auf das Polyurethanreaktionsgemisch, beträgt und das Verhältnis der Anzahl der NCO-Gruppen der Komponente A) zu der Anzahl der OH-Gruppen der Komponenten B1), B2) und C) von 1,35:1 bis 10:1 ist.

2. Sheet-moulding compound (SMC) bestehend aus zwei äußeren Trägerfolien und einem faserverstärkten Kern aus nicht vollständig ausgehärtetem Polyurethan, wobei der Kern 5 bis 50 Gew.-% Verstärkungsfasern und 50 bis 95 Gew.-% nicht vollständig ausgehärtetes Polyurethan enthält, wobei das Polyurethan aus einem Gemisch aus folgenden Komponenten besteht
A) einer oder mehreren aromatischen Isocyanatkomponenten,
B1) 70 bis 100 Gew.-% einer oder mehreren Polyolkomponenten ausgewählt aus der Gruppe bestehend aus Polyetherpolyolen, Polyesterpolyolen und Polycarbonatpolyolen mit 70 bis 100 % sekundären OH-Gruppen, bezogen auf sämtliche OH-Gruppen im Molekül, mit einer zahlenmittleren OH-Zahl von 15 bis 500 mg KOH/g (gemäß DIN EN ISO 53240, Teil 2, Version November 2007) und einer zahlenmittleren Funktionalität von 1,9 bis 2,5,
B2) 0 bis 30 Gew.-% eines oder mehrerer Polyole ausgewählt aus der Gruppe bestehend aus Polyetherpolyolen, Polyesterpolyolen und Polycarbonatpolyolen mit einer zahlenmittleren OH-Zahl von 15 bis 500 mg KOH/g (gemäß DIN EN ISO 53240, Teil 2, Version November 2007) und einer zahlenmittleren Funktionalität von 1,9 bis 2,5, ausgenommen der Polyolkomponente B1),
wobei die Summe aus B1) und B2) 100 Gew.-% ergibt und mindestens 70% der Gesamtheit der OH-Gruppen der Komponenten B1) und B2) sekundäre OH-Gruppen sind,
C) gegebenenfalls einem oder mehreren kurzkettigen Polyolen mit einer zahlenmittleren OH-Zahl von 550 bis 2000 mg KOH/g (gemäß DIN EN ISO 53240, Teil 2, Version November 2007) und einer zahlenmittleren Funktionalität von 1,9 bis 6,
D) einem oder mehreren internen Trennmitteln,
E) einem oder mehreren thermolatenten Katalysatoren, die bei Temperaturen von 50° bis 120°C, bevorzugt von 60 bis 100°C, katalytisch wirksam sind,
F) anorganischen Füllstoffen,
G) gegebenenfalls Hilfs- und/oder Zusatzstoffen,
**dadurch gekennzeichnet, dass** das PUR-Reaktionsgemisch bei 23°C eine Anfangsviskosität 2500 bis 14000 mPas (gemessen nach DIN EN ISO 53019, Viskosimetrie -Messung von Viskositäten und Fließkurven mit Rotationsviskosimetern, Teil 1: Grundlagen und Messgeometrie,Version September 2008, Scherrate d/dt = 1 1/s) aufweist, der Gehalt an anorganischen Füllstoffen 20 bis 70 Gew.-%, bezogen auf das Polyurethanreaktionsgemisch, beträgt und das Verhältnis der Anzahl der NCO-Gruppen der Komponente A) zu der Anzahl der OH-Gruppen der Komponenten B1), B2) und C) von 1,35:1 bis 10:1 ist.

3. Verwendung eines oder mehrerer SMC gemäß Anspruch 2 zur Herstellung von Faserverbundbauteilen.

## Claims

1. Process for producing a polyurethane-based fibre composite component part comprising the following process steps:
a) producing a polyurethane reaction mixture
b) applying the reaction mixture atop at least one of two carrier films
c) bestowing the reaction mixture on the at least one of the two carrier films with reinforcing fibres
d) bringing together the two carrier films from c) so that the carrier films on both sides surround the reaction mixture comprising the reinforcing fibres and a sandwich is formed,
e) rolling the sandwich via rolls and/or rollers, optionally subsequent rolling up to afford the so-called sheet moulding compound (SMC) or optionally subsequent cutting of the sandwich into so-called SMC pieces and stacking of these SMC pieces
f) optionally storing the rolled-up SMC or the SMC stack
g) converting the product from step e) or f) and removing the two carrier films
h) optionally stacking a plurality of products from step g)
i) moulding and completely curing the product from step g) or h) in a mould to afford the fibre composite component part,
wherein the employed polyurethane reaction mixture consists of the following components
A) one or more aromatic isocyanate components,
B1) 70% to 100% by weight of one or more polyol components selected from the group consisting of polyether polyols, polyester polyols and polycarbonate polyols having 70% to 100% secondary OH groups based on all of the OH groups in the molecule and having a number-average OH number of 15 to 500 mg KOH/g (according to DIN EN ISO 53240, Part 2, November 2007 version) and a number-average functionality of 1.9 to 2.5,
B2) 0% to 30% by weight of one or more polyols selected from the group consisting of polyether polyols, polyester polyols and polycarbonate polyols having a number-average OH number of 15 to 500 mg KOH/g (according to DIN EN ISO 53240, Part 2, November 2007 version) and a number-average functionality of 1.9 to 2.5 excluding the polyol component B1),
wherein B1) and B2) sum to 100% by weight and at least 70% of the entirety of the OH groups of components B1) and B2) are secondary OH groups,
C) optionally one or more short-chain polyols having a number-average OH number of 550 to 2000 mg KOH/g (according to DIN EN ISO 53240, Part 2, November 2007 version) and a number-average functionality of 1.9 to 6,
D) one or more internal release agents,
E) one or more thermolatent catalysts catalytically active at temperatures of 50°C to 120°C, preferably of 60°C to 100°C,
F) inorganic fillers,
G) optionally auxiliary and/or additive substances,
**characterized in that** at 23°C the PUR reaction mixture has a starting viscosity of 2500 to 14000 mPas (measured according to DIN EN ISO 53019, Viscometry - Measurement of viscosities and flow curves with rotational viscometers, Part 1: Fundamentals and measurement geometry, September 2008 version, shear rate d/dt = 1 1/s), the content of inorganic fillers is 20% to 70% by weight, based on the polyurethane reaction mixture, and the ratio of the number of NCO groups of component A) to the number of OH groups of components B1), B2) and C) is from 1.35:1 to 10:1.

2. Sheet moulding compound (SMC) consisting of two outer carrier films and a fibre-reinforced core composed of incompletely cured polyurethane, wherein the core contains 5% to 50% by weight of reinforcing fibres and 50% to 95% by weight of incompletely cured polyurethane, wherein the polyurethane consists of a mixture of the following components
A) one or more aromatic isocyanate components,
B1) 70% to 100% by weight of one or more polyol components selected from the group consisting of polyether polyols, polyester polyols and polycarbonate polyols having 70% to 100% secondary OH groups based on all of the OH groups in the molecule and having a number-average OH number of 15 to 500 mg KOH/g (according to DIN EN ISO 53240, Part 2, November 2007 version) and a number-average functionality of 1.9 to 2.5,
B2) 0% to 30% by weight of one or more polyols selected from the group consisting of polyether polyols, polyester polyols and polycarbonate polyols having a number-average OH number of 15 to 500 mg KOH/g (according to DIN EN ISO 53240, Part 2, November 2007 version) and a number-average functionality of 1.9 to 2.5 excluding the polyol component B1),
wherein B1) and B2) sum to 100% by weight and at least 70% of the entirety of the OH groups of components B1) and B2) are secondary OH groups,
C) optionally one or more short-chain polyols having a number-average OH number of 550 to 2000 mg KOH/g (according to DIN EN ISO 53240, Part 2, November 2007 version) and a number-average functionality of 1.9 to 6,
D) one or more internal release agents,
E) one or more thermolatent catalysts catalytically active at temperatures of 50°C to 120°C, preferably of 60°C to 100°C,
F) inorganic fillers,
G) optionally auxiliary and/or additive substances,
**characterized in that** at 23°C the PUR reaction mixture has a starting viscosity of 2500 to 14000 mPas (measured according to DIN EN ISO 53019, Viscometry - Measurement of viscosities and flow curves with rotational viscometers, Part 1: Fundamentals and measurement geometry, September 2008 version, shear rate d/dt = 1 1/s), the content of inorganic fillers is 20% to 70% by weight, based on the polyurethane reaction mixture, and the ratio of the number of NCO groups of component A) to the number of OH groups of components B1), B2) and C) is from 1.35:1 to 10:1.

3. Use of one or more SMC according to Claim 2 for producing fibre composite component parts.

## Revendications

1. Procédé pour la préparation d'un élément composite fibreux à base de polyuréthane comportant les étapes de procédé suivantes :
a) préparation d'un mélange de réaction de polyuréthane
b) dépôt du mélange de réaction sur au moins l'une parmi deux feuilles de support
c) application de fibres de renforcement au mélange de réaction sur l'au moins une des deux feuilles de support
d) assemblage des deux feuilles de support de c), de sorte que les feuilles de support entourent le mélange de réaction comportant les fibres de renforcement sur les deux côtés et qu'un sandwich est produit,
e) foulage du sandwich sur des rouleaux et/ou des cylindres,
éventuellement ensuite enroulement pour donner un dénommé mélange à mouler en feuille (SMC) ou éventuellement ensuite découpe du sandwich en dénommées pièces de SMC et empilement de ces pièces de SMC
f) éventuellement stockage du SMC enroulé ou de l'empilement de SMC
g) confection du produit de l'étape e) ou f) et élimination des deux feuilles de support
h) éventuellement empilement de plusieurs produits de l'étape g)
i) mise en forme et durcissement total du produit de l'étape g) ou h) dans un outil de moulage par compression pour donner l'élément composite fibreux,
le mélange de réaction de polyuréthane utilisé étant constitué des composants suivants
A) d'un ou plusieurs composants de type isocyanate aromatique,
B1) 70 à 100 % en poids d'un ou plusieurs composants de polyol choisis dans le groupe constitué par des polyétherpolyols, des polyesterpolyols et des polycarbonatepolyols comportant 70 à 100 % en poids de groupes OH secondaire, par rapport à tous les groupes OH dans la molécule, comportant un indice d'OH moyen en nombre de 15 à 500 mg de KOH/g (selon la norme DIN EN ISO 53240, partie 2, version novembre 2007) et une fonctionnalité moyenne en nombre de 1,9 à 2,5,
B2) 0 à 30 % en poids d'un ou plusieurs polyols choisis dans le groupe constitué par des polyétherpolyols, des polyesterpolyols et des polycarbonatepolyols comportant un indice d'OH moyen en nombre de 15 à 500 mg de KOH/g (selon la norme DIN EN ISO 53240, partie 2, version novembre 2007) et une fonctionnalité moyenne en nombre de 1,9 à 2,5, à l'exception du composant de polyol B1), la somme de B1) et B2) donnant 100 % en poids et au moins 70 % de la totalité des groupes OH des composants B1) et B2) étant des groupes OH secondaire,
C) éventuellement d'un ou plusieurs polyols à chaîne courte comportant un indice d'OH moyen en nombre de 550 à 2 000 mg de KOH/g (selon la norme DIN EN ISO 53240, partie 2, version novembre 2007) et une fonctionnalité moyenne en nombre de 1,9 à 6,
D) d'un ou plusieurs moyens de séparation internes,
E) d'un ou plusieurs catalyseurs thermiquement latents qui sont catalytiquement efficaces à des températures de 50° à 120°C, préférablement de 60 à 100°C,
F) de charges inorganiques,
G) éventuellement d'auxiliaires et/ou d'additifs, **caractérisé en ce que** le mélange de réaction PUR présente une viscosité de départ à 23 °C de 2 500 à 14 000 mPas (mesurée selon la norme DIN EN ISO 53019, viscosimétrie - mesure de viscosités et de courbes d'écoulement avec des viscosimètres rotatifs, partie 1 : bases et géométrie de mesure, version septembre 2008, vitesse de cisaillement d/dt = 1 1/s), la teneur en charges inorganiques est de 20 à 70 % en poids, par rapport au mélange de réaction de polyuréthane, et le rapport du nombre de groupes NCO du composant A) sur le nombre de groupes OH des composants B1), B2) et C) est de 1,35 : 1 à 10 : 1.

2. Mélange à mouler en feuille (SMC) constitué de deux feuilles de support externes et d'un noyau renforcé par des fibres composés de polyuréthane non totalement durci, le noyau contenant 5 à 50 % en poids de fibres de renforcement et 50 à 95 % en poids de polyuréthane non totalement durci, le polyuréthane étant constitué d'un mélange des composants suivants
A) d'un ou plusieurs composants de type isocyanate aromatique,
B1) 70 à 100 % en poids d'un ou plusieurs composants de polyol choisis dans le groupe constitué par des polyétherpolyols, des polyesterpolyols et des polycarbonatepolyols comportant 70 à 100 % en poids de groupes OH secondaire, par rapport à tous les groupes OH dans la molécule, comportant un indice d'OH moyen en nombre de 15 à 500 mg de KOH/g (selon la norme DIN EN ISO 53240, partie 2, version novembre 2007) et une fonctionnalité moyenne en nombre de 1,9 à 2,5,
B2) 0 à 30 % en poids d'un ou plusieurs polyols choisis dans le groupe constitué par des polyétherpolyols, des polyesterpolyols et des polycarbonatepolyols comportant un indice d'OH moyen en nombre de 15 à 500 mg de KOH/g (selon la norme DIN EN ISO 53240, partie 2, version novembre 2007) et une fonctionnalité moyenne en nombre de 1,9 à 2,5, à l'exception du composant de polyol B1), la somme de B1) et B2) donnant 100 % en poids et au moins 70 % de la totalité des groupes OH des composants B1) et B2) étant des groupes OH secondaire,
C) éventuellement d'un ou plusieurs polyols à chaîne courte comportant un indice d'OH moyen en nombre de 550 à 2 000 mg de KOH/g (selon la norme DIN EN ISO 53240, partie 2, version novembre 2007) et une fonctionnalité moyenne en nombre de 1,9 à 6,
D) d'un ou plusieurs moyens de séparation internes,
E) d'un ou plusieurs catalyseurs thermiquement latents qui sont catalytiquement efficaces à des températures de 50° à 120°C, préférablement de 60 à 100°C,
F) de charges inorganiques,
G) éventuellement d'auxiliaires et/ou d'additifs, **caractérisé en ce que** le mélange de réaction PUR présente une viscosité de départ à 23 °C de 2 500 à 14 000 mPas (mesurée selon la norme DIN EN ISO 53019, viscosimétrie - mesure de viscosités et de courbes d'écoulement avec des viscosimètres rotatifs, partie 1 : bases et géométrie de mesure, version septembre 2008, vitesse de cisaillement d/dt = 1 1/s), la teneur en charges inorganiques est de 20 à 70 % en poids, par rapport au mélange de réaction de polyuréthane, et le rapport du nombre de groupes NCO du composant A) sur le nombre des groupes OH des composants B1), B2) et C) est de 1,35 : 1 à 10 : 1.

3. Utilisation d'un ou plusieurs SMC selon la revendication 2 pour la préparation d'éléments composites fibreux.
